# EUROPÄISCHE PATENTANMELDUNG

(11) **EP 2 083 559 A1**
(43) Veröffentlichungstag der Anmeldung: **29.07.2009**
(21) Anmeldenummer: 08001162.0
(22) Anmeldetag: 23.01.2008
(51) Int. Cl.: H04M 3/51

(54) **Verfahren zum Herstellen einer Kommunikationsverbindung zu Gruppenrufnummern und Übermittlung von Statusnachrichten an den Anrufer**

(71) Anmelder: Avaya GmbH & Co. KG, 60326 Frankfurt am Main (DE)
(72) Erfinder: Riede, Sven, 22941 Bargteheide (DE)
(74) Vertreter: Tergau & Pohl Patentanwälte

(57) **Zusammenfassung**

Ein Verfahren zum Herstellen einer Kommunikationsverbindung zwischen einem Anrufer und durch Anwahl einer zugeordneten Gruppenrufnummer ausgewählten Gruppe eines Kommunikationsnetzwerks zugehörigen weiteren Kommunikationsendgerät (2,4,6), wobei die Auswahl des weiteren Kommunikationsendgeräts (2,4,6) von einer Vermittlungseinheit (14) des Kommunikationsnetzwerks anhand einer Verfügbarkeitsinformation vorgenommen wird, und wobei die Verbindungsherstellung durch Austausch einer Startnachricht und einer Anzahl von Verbindungsbestätigungsnachrichten (SIP Messages) zwischen dem anrufenden Endgerät und dem ausgewählten weiteren Kommunikationsendgerät (2,4,6) eingeleitet wird, soll mit besonders einfachen Mitteln in besonders weitgehendem Umfang eine Berücksichtigung der Anruferwünsche ermöglichen (Rückrufwunsch), wenn aktuell gerade kein Kommunikationsendgerät aus der angerufenen Gruppe verfügbar sein sollte. Dazu wird erfindungsgemäß dem bei mangelnder Verfügbarkeit sämtlicher der ausgewählten Gruppe des Kommunikationsnetzwerkes zugehörigen Kommunikationsendgeräte (2,4,6) eine von einem anrufenden Endgerät eingehende Startnachricht einem virtuellen, der Gruppenrufnummer zugeordneten Kommunikationsendgerät (16) zugeleitet, d.h. eine Verfügbarkeits- oder Präsenzinformation an dem Anrufer übermittelt.

## Beschreibung

Die Erfindung bezieht sich auf ein Verfahren zum Herstellen einer Kommunikationsverbindung zwischen einem anrufenden Kommunikationsendgerät und einem einer vom Anrufer durch Anwahl einer zugeordneten Gruppenrufnummer ausgewählten Gruppe eines Kommunikationsnetzwerks zugehörigen weiteren Kommunikationsendgerät, wobei die Auswahl des weiteren Kommunikationsendgeräts von einer Vermittlungseinheit des Kommunikationsnetzwerks anhand einer Verfügbarkeitsinformation vorgenommen wird, und wobei die Verbindungsherstellung durch Austausch einer Startnachricht und einer Anzahl von Verbindungsbestätigungsrichten zwischen dem anrufenden Kommunikationsendgerät und dem ausgewählten weiteren Kommunikationsendgerät eingeleitet wird. Sie betrifft weiterhin eine Telekommunikationsanlage mit einem eine Vermittlungseinheit umfassenden Server, an den eine Mehrzahl von gruppenweise zusammengefassten Kommunikationsendgeräten angeschlossen ist, wobei der Server zur Herstellung von Kommunikationsverbindungen mit ausgewählten Kommunikationsendgeräten durch Austausch einer Startnachricht und einer Anzahl von Verbindungsbestätigungsnachrichten zwischen einem anrufenden Kommunikationsendgerät und dem jeweils ausgewählten Kommunikationsendgerät ausgelegt ist.

In modernen Telekommunikations- oder Telefonanlagen oder -systemen, wie beispielsweise Call-Centern, sind üblicherweise eine Vielzahl von Telefonie- oder Kommunikationsendgeräten mit einer zentralen Vermittlungseinheit verbunden, über die Telekommunikationsverbindungen zwischen einzelnen Kommunikationsendgeräten oder auch von von außerhalb des internen Telefonnetzwerks eingehenden Anrufen mit ausgewählten Kommunikationsendgeräten hergestellt werden. Im Rahmen dieser Telekommunikationsverbindungen werden Sprach- oder Nutzdaten zu dem jeweils ausgewählten Telefonie-Endgerät hin und/oder von diesem an die zentrale Vermittlungseinrichtung und von dieser an das jeweilige Endgerät übertragen. Die Datenübertragung kann dabei auf herkömmliche Weise oder auch unter Nutzung des Internet-Protokolls vorgenommen werden.

Bei vergleichsweise komplexen Telefonanlagen oder -systemen, wie beispielsweise in Call-Centem oder dergleichen, oder bei Telefonanlagen in Unternehmen oder Organisationseinheiten, bei denen das angerufene Kommunikationsendgerät nicht notwendigerweise aufgrund der Person des jeweiligen Nutzers, sondern aufgrund von dessen sachlicher Qualifikation oder Zuständigkeit ausgewählt wird, können die Kommunikationsendgeräte gruppenweise organisiert oder zusammengefasst sein, wobei jeder Gruppe eine vom Anrufer wählbare Gruppenrufnummer zugeordnet sein kann. Beispielsweise kann dabei in einem Call-Center eine Gruppe von Kommunikationsendgeräten für die Funktion "Verkauf" vorgesehen sein, wobei ein Anrufer oder Kunde eine zentrale, für den Verkauf vorgesehene Telefonnummer anwählt und anschließend von einer zugeordneten Vermittlungseinheit des Kommunikationsnetzwerks an ein dieser Gruppe zugeordnetes Kommunikationsendgerät weiter vermittelt wird, über das ein Mitarbeiter des Verkaufs erreichbar ist. Kriterium für die Auswahl eines geeigneten Kommunikationsendgeräts aus der jeweils durch die entsprechende Gruppenrufnummer angewählten Gruppe durch die Vermittlungseinheit ist dabei üblicherweise die Verfügbarkeit des jeweiligen Kommunikationsendgeräts, wobei üblicherweise sämtliche der jeweiligen Gruppe zugeordneten Kommunikationsendgeräte ihre aktuelle Verfügbarkeit über eine entsprechende Verfügbarkeitsinformation an die Vermittlungseinheit melden.

Derartige Telekommunikationsanlagen, insbesondere für Call-Center oder Contact-Center, können insbesondere auch für eine Datenübertragung über Multime-dia-Anwendungen oder insbesondere auch das Internet-Protokoll ausgelegt sein. In derartigen Anlagen kann zur Herstellung einer Kommunikationsverbindung auf das so genannte Session-Initiation-Protocol (SIP)-Konzept zurückgegriffen werden. Dabei werden vor der Herstellung der eigentlichen Kommunikationsverbindung die Kommunikationsmodalitäten durch einen geeigneten Datenaustausch zwischen den beteiligten Kommunikationsendgeräten, also insbesondere dem anrufenden Kommunikationsendgerät und dem vorgesehenen Ziel-Kommunikationsendgerät, vereinbart. Hierzu wird bei derartigen Anlagen vom anrufenden Kommunikationsendgerät eine Startnachricht verschickt, in der unter der gewünschten Zieladresse zusätzlich zu gegebenenfalls vorgesehenen weiteren Informationen eine Anfrage zum Einrichten einer Verbindung übermittelt wird. Falls das gewünschte Ziel-Kommunikationsendgerät verfügbar ist und eine Kommunikationsverbindung hergestellt werden soll, so übermittelt das Ziel-Kommunikationsendgerät eine entsprechende Bestätigungsnachricht, in der wiederum Zusatzinformationen mit übermittelt werden können. Auf der Grundlage der dabei ausgetauschten Informationen, in der unter anderem Kriterien für die eigentliche Kommunikationsverbindung, aber auch Statusinformationen über die derzeitige oder zukünftige Verfügbarkeit der Kommunikationsteilnehmer oder dergleichen übermittelt werden können, wird anschließend die erstrebte Kommunikationsverbindung hergestellt.

Bei der Anwendung einer derartigen SIP-Technologie in komplexen Telefonanlagen, wie beispielsweise in Call-Centem oder Contact-Centern, ist üblicherweise jedem Kommunikationsendgerät eine individuelle SIP-Adresse zugewiesen, so dass jedes solchermaßen in das Netzwerk eingebundene Kommunikationsendgerät zur Einleitung einer Verbindungsherstellung entsprechend adressiert und Daten mit ihm ausgetauscht werden können. Ein solchermaßen über die SIP-Technologie in das Kommunikationswerk eingebundene Kommunikationsendgerät wird auch als "SIP-Endpunkt" bezeichnet, wobei jeder SIP-Endpunkt als mögliche Adresse für SIP-Mitteilungen registriert ist.

Bei der Auslegung vergleichsweise komplexer Telefonanlagen, insbesondere für Call-Center oder Contact-Center ist die Serviceausrichtung oder die Erreichung einer hohen Kundenzufriedenheit bei den Anrufern von besonderer Bedeutung. Dabei soll insbesondere für den Fall, dass bei einem Kundenanruf nicht sofort ein Kontakt zu einem entsprechend zuständigen Service-Mitarbeiter hergestellt werden kann, so gut wie möglich den Anruferwünschen hinsichtlich eines möglichen Rückrufs, eines möglichen Neuanrufs oder einer automatisierten Abfragemöglichkeit Rechnung getragen werden. Für den Fall, dass für einen anrufenden Kunden aus dem angerufenen Servicebereich aktuell kein Gesprächspartner zur Verfügung steht, wird dabei üblicherweise auf eine hinterlegte Bandansage oder Anrufbeantworterfunktion umgeschaltet, oder der derzeitige Anruf muss vorübergehend unterbrochen werden. Dies kann für die anrufenden Kunden unbefriedigend sein, insbesondere wenn ihnen bei mangelnder Verfügbarkeit eines Servicemitarbeiters lediglich noch die Option eines späteren Neuanrufs verbleibt.

Der Erfindung liegt daher die Aufgabe zugrunde, ein Verfahren zum Herstellen einer Kommunikationsverbindung der oben genannten Art anzugeben, bei dem mit besonders einfachen Mitteln in besonders weitgehendem Umfang auf die Anruferwünsche eingegangen werden kann, wenn aktuell gerade kein Kommunikationsendgerät aus der angerufenen Gruppe verfügbar sein sollte. Des Weiteren soll zur Durchführung des Verfahrens eine besonders geeignete Telekommunikationsanlage angegeben werden.

Bezüglich des Verfahrens wird diese Aufgabe erfindungsgemäß gelöst, indem bei mangelnder Verfügbarkeit sämtlicher der ausgewählten Gruppe des Kommunikationsnetzwerks zugehörigen Kommunikationsendgeräte eine von einem anrufenden Kommunikationsendgerät eingehende Startnachricht einem virtuellen, der Gruppenrufnummer zugeordneten Kommunikationsendgerät zugeleitet wird.

Unter konsequenter Nutzung der für die technologische Struktur der Telekommunikationsanlage vorgesehenen SIP-Technologie ist damit somit vorgesehen, nicht nur jedes der vorhandenen Kommunikationsendgeräte als SIP-Endpunkt in der SIP-Struktur vorzusehen, sondern darüber hinaus auch noch die einschlägigen Gruppenrufnummern als SIP-Endpunkte zu definieren. Die Einrichtung derartiger gruppenrufnummernbezogener SIP-Endpunkte kann dabei beispielsweise über die Einrichtung eines virtuellen Kommunikationsendgeräts auf einer zentralen Rechnereinheit oder dem Server der entsprechenden Telekommunikationsanlage erfolgen.

Damit ist ermöglicht, bereits im Rahmen der einleitenden Maßnahmen bei der Verbindungsherstellung, also beim vorbereitenden Austausch von Anfrage- und Antwortsignalen zwischen Anrufer und angerufenem Teilnehmer unter Nutzung der SIP-Technologie, geeignete Verfügbarkeits- oder Präsenzinformationen an den Anrufer zu übermitteln, wobei diese Informationen nicht lediglich für die individuellen Arbeitsplätze oder eigentlichen Kommunikationsendgeräte der Telekommunikationsanlage, sondern gruppenweise und damit funktionsorientiert bereitgestellt werden können. Damit kann beispielsweise einem Anrufer, der die Funktionsgruppe "Verkauf" eines Unternehmens angewählt hat, direkt und ohne Rückfrage bei den tatsächlich vorhandenen Kommunikationsendgeräten mitgeteilt werden, wann das Call-Center in seiner Gesamtheit besetzt ist, wann die Geschäftszeiten sind oder dergleichen.

Es ist darüber hinaus auch ermöglicht, über den bereitgestellten SIP-Endpunkt zentralisiert und arbeitsplatzunabhängig vorbereitende Informationen, wie beispielsweise einen Rückrufwunsch oder dergleichen, auszutauschen, ohne dass dabei eine Individualabfrage der einzelnen Arbeitsplätze oder die Aufnahme eines Ersatzgesprächs erforderlich wäre. Die dem virtuellen, der Gruppenrufnummer zugeordneten Kommunikationsendgerät zugeleitete Startnachricht kann somit auf verschiedene Weise weiterbearbeitet werden. Beispielsweise kann dabei bei mangelnder Verfügbarkeit sämtlicher Kommunikationsendgeräte der angewählten Gruppe intern überprüft werden, ob möglicherweise als Alternative zum eingehenden Verbindungswunsch ein Kommunikationsgerät einer anderen, möglicherweise zumindest partiell äquivalenten Gruppe angewählt werden könnte.

Vorteilhafterweise ist die Weiterverarbeitung der eingehenden Startnachricht dabei darauf ausgelegt, dem Anrufer zumindest eine Information über den derzeitigen Anlagenstatus oder auch eine Option über eine zukünftige Weiterführung des Gesprächs zu übermitteln. Dazu wird vorteilhafterweise die dem virtuellen Kommunikationsendgerät zugeleitete Startnachricht mit einer Statusnachricht über die Verfügbarkeit der der ausgewählten Gruppe des Kommunikationsnetzwerks zugehörigen Kommunikationsendgeräte beantwortet. In alternativer oder zusätzlicher vorteilhafter Ausgestaltung wird bei eintretender Verfügbarkeit bei zumindest einem der ausgewählten Gruppe des Kommunikationsnetzwerkes zugehörigen Kommunikationsendgeräte eine entsprechende Statusnachricht an das anrufende Kommunikationsendgerät gesendet.

Bezüglich der Telekommunikationsanlage der oben genannten Art wird die genannte Aufgabe gelöst, indem auf dem Server zum Austausch von Start- und Statusnachrichten für die oder jede Gruppe der Kommunikationsendgeräte ein der jeweiligen Gruppenrufnummer zugeordnetes virtuelles Kommunikationsendgerät definiert ist.

Die mit der Erfindung erzielten Vorteile bestehen insbesondere darin, dass durch die Ober die eigentlichen Kommunikationsendgeräte hinausgehende Definition der funktions- oder zuständigkeitsgebunden zugeordneten Gruppenrufnummer als eigenständiger SIP-Endpunkt ein besonders bedarfsgerechtes, auf die Kundenwünsche besonders zugeschnittenes Informationsmanagement bereits im Vorfeld der Herstellung einer Kommunikationsverbindung ermöglicht ist. Damit ist ohne die Notwendigkeit eines individualisierten Rückgriffs auf die eigentlichen Kommunikationsendgeräte eine zentralisierte Verwaltung funktionsabhängig vorgetragener Kundenwünsche, wie beispielsweise eines Rückrufwunsches durch einen Verkaufsmitarbeiter, ermöglicht.

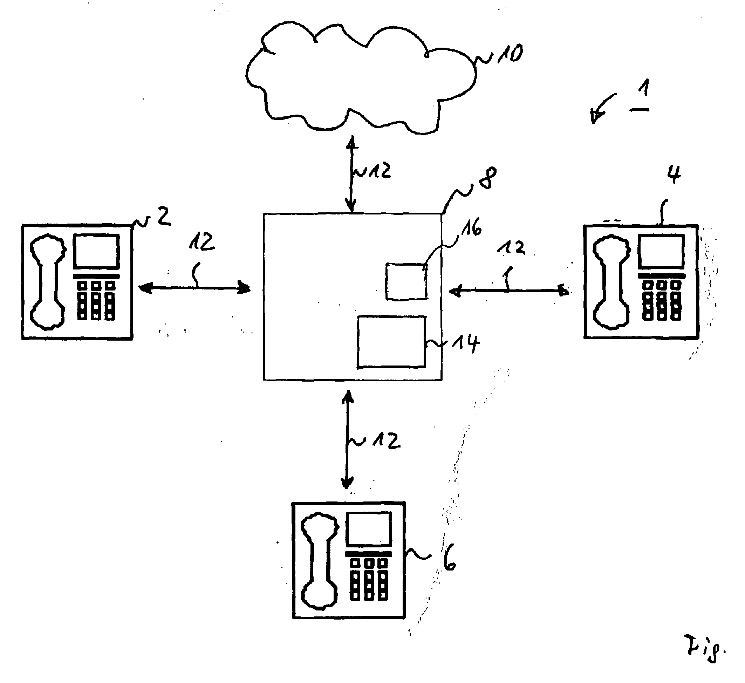

Ein Ausführungsbeispiel der Erfindung wird anhand einer Zeichnung näher erläutert. Darin zeigt die Figur schematisch eine Telekommunikationsanlage.

Die Telefonanlage 1 gemäß der Figur umfasst eine Anzahl von Kommunikationsendgeräten 2,4,6, die datenseitig mit einem gemeinsamen Server 8, auch als Telekommunikationsserver bezeichnet, verbunden sind. Der Server 8 ist dabei seinerseits mit einem externen Telefonnetz 10 verbunden. Im Ausführungsbeispiel ist als Übertragungsmedium das Internet-Protokoll vorgesehen, wobei der Server 8 über das Internet geeignet mit dem Telefonnetz verbunden ist.

Wie durch die Doppelpfeile 12 angedeutet, ist der Server 8 sowohl mit dem externen Telefonnetz 10 als auch mit den internen Kommunikationsendgeräten 2,4,6 über geeignete Daten- oder Kommunikationskanäle verbunden. Beim Betrieb der Kommunikationsanlage 1 werden dabei mit den Kommunikationsendgeräten 2,4,6 einerseits Sprach- oder Nutzdaten ausgetauscht, die im Hinblick auf den im Ausführungsbeispiel vorgesehen Rückgriff auf die Nutzung des Internet-Protokolls in geeigneter komprimierter und digitalisierter Form ausgetauscht werden. Zusätzlich zu den Sprach- oder Nutzdaten können über die genannten Kommunikationskanäle aber auch Funktionsdaten übertragen werden, anhand derer Sonderfunktionen der Telekommunikationsanlage 1 ausgeführt werden können. Als Sonderfunktionen sind dabei im Ausführungsbeispiel in durchaus üblicher Ausgestaltung insbesondere von den einzelnen Nutzern aktivierbare Funktionen, wie beispielsweise Umleitungen, Anrufbeantworterfunktionen, Gebührenverwaltung oder dergleichen vorgesehen.

Darüber hinaus ist die Telekommunikationsanlage 1 ihrer Struktur nach für die Nutzung des Session-Initiation-Protocolls (SIP) ausgelegt, wobei die Kommunikationsendgeräte 2,4,6 als SIP-Endpunkte definiert und zur Vorbereitung der Herstellung einer Kommunikationsverbindung mit einem der anderen Kommunikationsendgeräte 2,4,6, oder mit einem extern über das Telefonnetz 10 erreichbaren anderen Kommunikationsendgerät separat und individuell adressierbar sind. Durch die Nutzung des SIP-Konzepts kann dabei bereits bei der Vorbereitung der Verbindungsherstellung eine Statusinformation, beispielsweise betreffend die individuelle Verfügbarkeit des jeweiligen Nutzers der Kommunikationsendgeräte 2,4,6, ausgetauscht werden.

Darüber hinaus sind in der Telekommunikationsanlage 1 die Kommunikationsendgeräte 2,4,6 funktions- oder zuständigkeitsabhängig zu unterschiedlichen Gruppen zusammengefasst. Bei der Nutzung der Telekommunikationsanlage 1 als Contact- oder Call-Center könnte dabei beispielsweise eine Gruppe von Kommunikationsendgeräten 2,4,6 der Funktionseinheit "Verkauf" zugeordnet sein.

Alternativ könnte bei Nutzung der Telekommunikationsanlage 1 als interne Telefonanlage eines Unternehmens oder dergleichen eine Gruppe der Kommunikationsendgeräte 2,4,6 durch die Zugehörigkeit zur "Abteilung Personal" oder dergleichen definiert sein. Den solchermaßen definierten Gruppen von Kommunikationsendgeräten 2,4,6, denen je nach Anwendungsfall selbstverständlich eine weitaus größere Anzahl einzelner Kommunikationsendgeräte zugeordnet sein kann, ist jeweils eine individuelle, funktions- oder zuständigkeitsabhängig definierte gemeinsame Telefonnummer als Gruppenrufnummer zugeordnet, die bei Bedarf von einem externen oder auch von einem internen Anrufer gezielt angerufen werden kann.

Zur weiteren Verdeutlichung wird für das Ausführungsbeispiel nach der Figur im Folgenden angenommen, dass die Kommunikationsendgeräte 4,6 einer derartigen Gruppe zugeordnet sind, wobei ein Anrufer, beispielsweise intern vom Kommunikationsendgerät 2 aus oder extern über das Telefonnetz 10, auf die Funktion oder Zuständigkeit dieser Gruppe, beispielsweise "Verkauf" oder "Abteilung Personal", zugreifen möchte. Dazu ist in dieser Gruppe innerhalb des Servers 8 eine der entsprechenden Gruppenrufnummer zugeordnete Vermittlungseinheit vorgesehen, auf der die durch Anwahl der jeweiligen Gruppenrufnummer charakterisierten Verbindungswünsche eingehen. Abhängig von einer über die entsprechenden Daten- oder Kommunikationskanäle übermittelten Verfügbarkeitsinformation bezüglich der der jeweiligen Gruppe zugehörigen Kommunikationsendgeräte 4,6 ermittelt die Vermittlungseinheit 14 bei einem eingehenden Verbindungswunsch umgehend, welches der Kommunikationsendgeräte 4,6 dieser Gruppe aktuell verfügbar ist, und stellt wenn möglich eine Kommunikationsverbindung zwischen dem eingehenden Anruf und dem als verfügbar erkannten Kommunikationsendgerät 4,6 her. Die Vorbereitung dieser Verbindungsherstellung erfolgt dabei unter Rückgriff auf die SIP-Technologie, wobei die dabei ausgetauschten Status- und Informationssignale bereits bei der Identifizierung der aktuell verfügbaren Geräte und somit bei der Auswahl des geeigneten Kommunikationsendgeräts 4,6 herangezogen werden können.

Unter konsequenter Nutzung der SIP-Technologie ist die Telekommunikationsanlage 1 darüber hinaus aber auch dafür ausgelegt, selbst für den Fall, dass bei einem eingehenden Anruf keines der der aktuell angewählte Gruppe zugeordneten Kommunikationsendgeräte 4,6 verfügbar sein sollte, ein besonders weitgehendes Eingehen auf Kundenwünsche und dergleichen ermöglicht ist. Dazu ist der jeweils gebildeten Gruppe ein auf dem Server 8 gebildetes virtuelles Kommunikationsendgerät 16 zugeordnet, das als eigenständiger SIP-Endpunkt definiert ist. Damit ist im Ergebnis der funktions- oder zuständigkeitsweise vor gegebenen Gruppenrufnummer ein separater, von den individuellen Kommunikationsendgeräten 4,6 unabhängiger SIP-Endpunkt zugeordnet, über den im Rahmen der SIP-Technologie gruppenbezogene Informationen, insbesondere Statusinformationen, abgewickelt werden können. Dabei wird für den Fall, dass in der Vermittlungseinheit 14 aktuell hinterlegt ist, dass derzeit gerade keine der zugeordneten Kommunikationsendgeräte 4,6 verfügbar sind, eine eingehende, den Wunsch nach einem Verbindungsaufbau mit einem zuständigen Mitarbeiter signalisierende Startnachricht dem virtuellen Kommunikationsendgerät 16 zugeleitet.

Anschließend kann diese Nachricht im Hinblick auf eine möglichst weitgehende Kundenzufriedenheit weiter verarbeitet werden. Insbesondere kann die dem virtuellen Kommunikationsendgerät zugeleitete Startnachricht mit einem Statussignal an den Anrufer beantwortet werden, dass derzeit keines der gewünschten Kommunikationsendgeräte 4,6 verfügbar ist, so dass bereits im Vorfeld der Verbindungsanbahnung der Anrufer eine entsprechende gruppen- oder funktionsbezogene Verfügbarkeitsinformation erhält. Des Weiteren können auf diese Weise im Rahmen des Datenaustauschs bei der Verbindungseinleitung bereits weitere Funktions- oder Zusatzdaten, beispielsweise über den Wunsch nach Rückruf oder eine Benachrichtigung, ab wann wieder mit einer Verfügbarkeit zu rechnen ist, übermittelt werden. Falls somit der Anrufer beispielsweise außerhalb der Öffnungs- oder Geschäftszeiten anruft, kann ihm auf diese Weise gruppen- oder funktionsbezogen bereits im Vorfeld der Verbindungsherstellung eine entsprechende Information über die relevanten Öffnungs- oder Geschäftszeiten übermittelt werden. Alternativ kann gruppen- oder funktionsbezogen ein Rückrufwunsch beim Anrufer abgefragt und durch die gruppenbezogene Erfassung zentral verwaltet werden.

Damit kann dem Anrufer unmittelbar und auch bedarfsgerecht eine Information über die weiteren Bearbeitungsmöglichkeiten seines Anrufwunsches bereitgestellt werden, die auf besonders einfache Weise repräsentativ für die gesamte Funktionseinheit oder Organisationseinheit ist

### Bezugszeichenliste

- 1: Telekommunikationsanlage
- 2, 4, 6: Kommunikationsendgerät
- 8: Server
- 10: Telefonnetz
- 12: Doppelpfeile
- 14: Vermittlungseinheit
- 16: Kommunikationsendgerät

## Patentansprüche

1. Verfahren zum Herstellen einer Kommunikationsverbindung zwischen einem anrufenden Kommunikationsendgerät (2, 4, 6) und einem einer vom Anrufer durch Anwahl einer zugeordneten Gruppenrufnummer ausgewählten Gruppe eines Kommunikationsnetzwerks zugehörigen weiteren Kommunikationsendgerät (2, 4, 6), wobei die Auswahl des weiteren Kommunikationsendgeräts (2, 4, 6) von einer Vermittlungseinheit (14) des Kommunikationsnetzwerks anhand einer Verfügbarkeitsinformation vorgenommen wird, und wobei die Verbindungsherstellung durch Austausch einer Startnachricht und einer Anzahl von Verbindungsbestätigungsnachrichten zwischen dem anrufenden Kommunikationsendgerät (2, 4, 6) und dem ausgewählten weiteren Kommunikationsendgerät (2, 4, 6) eingeleitet wird, bei dem bei mangelnder Verfügbarkeit sämtlicher der ausgewählten Gruppe des Kommunikationsnetzwerkes zugehörigen Kommunikationsendgeräte (2 ,4, 6) eine von einem anrufenden Kommunikationsendgerät (2, 4, 6) eingehende Startnachricht einem virtuellen, der Gruppenrufnummer zugeordneten Kommunikationsendgerät (16) zugeleitet wird.

2. Verfahren nach Anspruch 1, **dadurch gekennzeichnet,**
**dass** die dem virtuellen Kommunikationsendgerät (16) zugeleitete Startnachricht mit einer Statusnachricht über die Verfügbarkeit der der ausgewählten Gruppe des Kommunikationsnetzwerkes zugehörigen Kommunikationsendgeräte (2, 4, 6) beantwortet wird.

3. Verfahren nach Anspruch 1 oder 2, **dadurch gekennzeichnet,**
**dass** bei eintretender Verfügbarkeit bei zumindest einem der ausgewählten Gruppe des Kommunikationsnetzwerkes zugehörigen Kommunikationsendgeräte (2, 4, 6) eine Statusnachricht an das anrufende Kommunikationsendgerät (2, 4, 6) gesendet wird.

4. Telekommunikationsanlage (1) mit einem eine Vermittlungseinheit (14) umfassenden Server (8), an den eine Mehrzahl von gruppenweise zusammengefassten Kommunikationsendgeräten (2, 4, 6) angeschlossen ist, wobei der Server (8) zur Herstellung von Kommunikationsverbindungen mit ausgewählten Kommunikationsendgeräten (2, 4, 6) durch Austausch einer Startnachricht und einer Anzahl von Verbindungsbestätigungsnachrichten zwischen einem anrufenden Kommunikationsendgerät (2, 4, 6) und dem jeweils ausgewählten Kommunikationsendgerät (2, 4, 6) ausgelegt ist, und wobei auf dem Server (8) zum Austausch von Start- und Statusnachrichten für die oder jede Gruppe der Kommunikationsendgeräte (2, 4, 6) ein der jeweiligen Gruppenrufnummer zugeordnetes virtuelles Kommunikationsendgerät (16) definiert ist.
